Europäisches Patentamt

European Patent Office

Office européen des brevets

(11) Veröffentlichungsnummer: **0 087 407**

**A1**

(12) **EUROPÄISCHE PATENTANMELDUNG**

(21) Anmeldenummer: **83890024.9**

(22) Anmeldetag: **21.02.83**

(51) Int. Cl.³: **B 60 C 27/10**

(30) Priorität: **19.02.82 AT 649/82**

(43) Veröffentlichungstag der Anmeldung:
**31.08.83 Patentblatt 83/35**

(84) Benannte Vertragsstaaten:
**CH DE FR IT LI SE**

(71) Anmelder: **HULEK, Anton, Dipl.-Ing.**
**Goglerfeldgasse 15**
**A-4040 Linz/Donau(AT)**

(72) Erfinder: **HULEK, Anton, Dipl.-Ing.**
**Goglerfeldgasse 15**
**A-4040 Linz/Donau(AT)**

(74) Vertreter: **Noske, Wolfgang, Dipl.-Ing.**
**Hamerlinggasse 19**
**A-2340 Mödling(AT)**

(54) **Gleitschutzeinrichtung für Luftreifen.**

(57) Es wird eine Gleitschutzeinrichtung für Luftreifen beschrieben, die mit einem allein durch Spannen in der Längsrichtung auf dem Umfang des Reifens 2 festlegbaren Band 1 ausgebildet ist. Das Band 1 hat ein Gleitschutzprofil und liegt am Umfang des Reifens 2 vorzugsweise mit einem Verzahnungsprofil an. Die beiden Enden des Bandes 1 sind mittels eines Seilzuges 3 zusammengespannt. Der Seilzug 3 geht von einem Festpunkt 4 an einem Ende des Bandes 1 aus und ist über mindestens eine Umlenkeinrichtung 5 am anderen Ende des Bandes 1 zu einer Seilspanneinrichtung 6 am ersterwähnten Ende zurückgeführt. Die Umlenkeinrichtung 5 ist quer innerhalb des Bandquerschnittes angeordnet und vorzugsweise als in das Ende des Bandes 1 eingelassene U-förmige Hülse oder Rinne ausgebildet. Das Seil des Seilzuges 3 ist mit einem Ende am Festpunkt 4 und mit seinem anderen Ende an der Seilspanneinrichtung 6 befestigbar, z.B. mittels einer Schlaufen-Haken-Verbindung einhängbar. Die Seilspanneinrichtung 6 kann vorteilhaft als am Bandende befestigte Seilwinde oder dort angelenkter Schwenkhebel mit einer Spannocke für das Seil ausgebildet sein.

FIG.1

0087407

Hulek Anton, Dipl.Ing.
A-4040 Linz/Donau (AT)
Österreich

**Gleitschutzeinrichtung für Luftreifen**

Die Erfindung betrifft eine Gleitschutzeinrichtung für Luftreifen, welche am Umfang des Reifens mittels eines Seilzuges festlegbar ist, der von einem Festpunkt an einem Ende ausgeht und über mindestens eine Umlenkeinrichtung am anderen Ende zum ersterwähnten Ende zurückgeführt ist.

Eine derartige Gleitschutzeinrichtung in Form von Schneeketten ist in der US-PS 3 884 283 beschrieben. Wie bei Schneeketten üblich dienen quer über den Reifenumfang verlaufende Kettenstränge dem Gleitschutz und sind diese durch zwei Seitenketten gehalten, die je an einer Reifenflanke anliegend rundum gespannt sind. Die schlecht zugängliche hintere Seitenkette und die vordere Seitenkette sind gemeinsam spannbar mittels eines Seilzuges, der die vier Enden der Seitenketten über je eine dort befindliche Seilrolle verbindet. Der Seilzug muß mit der Hand gespannt und mit dem an seinem Ende befindlichen Haken in ein Kettenglied einer Seitenkette eingehängt werden. Das Anlegen der bekannten Schneeketten ist umständlich.

Aus der AT-PS 354 873 des Patentinhabers ist eine Gleitschutzeinrichtung bekannt, die im Gegensatz zu üblichen Schneeketten ohne an den Reifenflanken anliegend zu spannende Seiten- bzw. Halteketten auskommt. Sie besteht aus einem am Umfang des Reifens mit einem Verzahnungsprofil anliegenden Band, das allein durch das Spannen in der Umfangrichtung am Reifen festlegbar ist. Das Anlegen der Gleitschutzeinrichtung ist sehr einfach. Es besteht lediglich der Nachteil, daß beim Spannen an den Enden des Bandes angreifende Schließen geschwenkt werden müssen, wofür viel - bei engen Radkasten nicht immer vorhandener - Freiraum notwendig ist.

Der Erfindung liegt die Aufgabe zugrunde, eine Gleitschutzeinrichtung für Luftreifen bereitzustellen, die wie die zuletzt

BAD ORIGINAL

erwähnte bekannte Gleitschutzeinrichtung ohne an den Reifenflanken anliegend zu spannende Seiten- bzw. Halteketten auskommt, jedoch eine verbesserte Spanneinrichtung aufweist. Diese soll ein einfaches Anlegen und einen sicheren Halt der Gleitschutzeinrichtung auf dem Reifen gewährleisten. Die Erfindung besteht bei einer Gleitschutzeinrichtung der eingangs genannten Art darin, daß die Umlenkeinrichtung bei der in an sich bekannter Weise als Band mit einem Gleitschutzprofil ausgebildeten Gleitschutzeinrichtung quer innerhalb des Bandquerschnittes angeordnet und am ersterwähnten Ende des Bandes eine Seilspanneinrichtung befestigt ist. Das Band der erfindungsgemäßen Gleitschutzeinrichtung kann sehr einfach am Reifen angelegt werden, weil keine an den Reifenflanken anliegende Seiten- bzw. Halteketten gespannt zu werden brauchen. Zur Festlegung am Reifen braucht nur die - zweckmäßig an der Radaußenseite befindliche - Seilspanneinrichtung betätigt zu werden, nachdem das an der Umlenkeinrichtung an einem Ende des Bandes gehaltene Seil des Seilzuges mit seinen Enden am Festpunkt und an der Seispanneinrichtung am anderen Ende des Bandes befestigt worden ist. Das Seil des Seilzuges ist vorteilhaft ausreichend lang, um die Befestigung nicht zu behindern.

Vorteilhaft ist (sind) die Umlenkeinrichtung(en) als U-förmige Hülse(n) oder als U-förmige Rinne(n) ausgebildet, die in das (die) Ende(n) des Bandes eingelassen ist (sind).

Für ein besonders gleichmäßiges Gegeneinander-spannen der Enden des Bandes und für dessen besonders sicheren Halt kann es zweckmäßig sein, wenn an einem Ende des Bandes in den beiden Randbereichen je eine Hülse und an dem anderen, den Festpunkt und die Seilspanneinrichtung aufweisenden Ende des Bandes in der Mitte eine Rinne angeordnet ist.

Das in den Umlenkeinrichtungen geführte Seil des Seilzuges kann zweckmäßig mit einem Ende am Festpunkt und mit seinem anderen Ende an der Seilspanneinrichtung, z.B. mittels einer Schlaufen-Haken-Verbindung, einhängbar sein.

Vorteilhaft kann die Seilspanneinrichtung als Seilwinde mit einer in eine Verzahnung eingreifenden Klinkensperre ausgebildet sein. Dabei weist die Seilwinde vorzugsweise eine axiale Öffnung mit einem Mehrkantquerschnitt auf, in welche in an sich bekannter Weise ein Kurbelschaft passenden Querschnitts einsteckbar ist.

Die Seilspanneinrichtung kann auch als am Bandende angelenkter Schwenkhebel mit einer Spannocke sowie mit einer Führung und einer Einhängung für das eine Ende des Seilzuges ausgebildet sein.

Es ist auch möglich, daß die Umlenkeinrichtung(en) in an sich bekannter Weise als am Bandende gelagerte Umlenkrolle(n) ausgebildet ist (sind).

Die Erfindung wird anhand von in der Zeichnung dargestellten Ausführungsbeispielen erfindungsgemäßer Gleitschutzeinrichtungen näher erläutert. Darin zeigt bzw. zeigen die

Fig. 1,2    einen Luftreifen mit Gleitschutzeinrichtung in
            Draufsicht bzw. Seitenansicht,

Fig. 3      eine andere Ausführungsform einer Gleitschutzeinrichtung in Draufsicht, die

Fig. 4,5    ein Detail aus den Fig. 1 bis 3 in Ansicht bzw. im
            Querschnitt und

Fig. 6      eine weitere Ausführungsform einer Gleitschutzeinrichtung in Draufsicht.

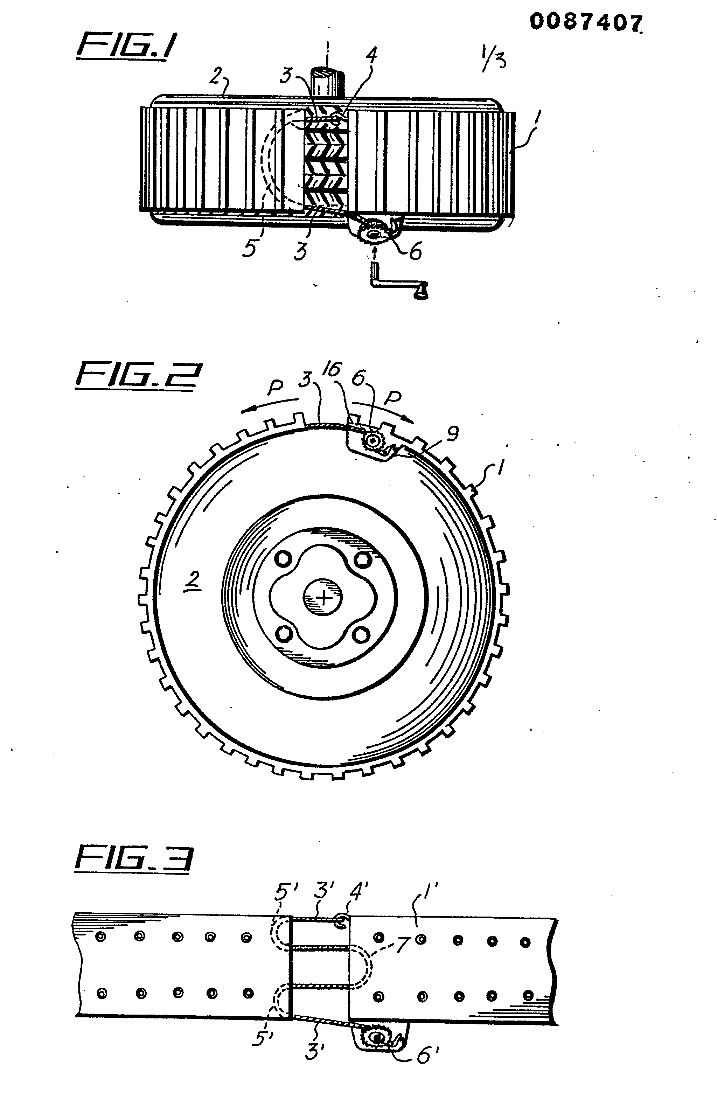

Ein ein Gleitschutzprofil aufweisendes Band 1 ist - wie aus den Fig. 1 und 2 ersichtlich - allein durch Spannen in seiner Längsrichtung auf einem Luftreifen 2 befestigt. Das Band 1 liegt am Umfang des Reifens mit einem Verzahnungsprofil an, wie es z.B. in der AT-PS 354 873 des Patentinhabers gezeigt ist.

Die beiden Enden des Bandes 1 sind mittels eines Seilzuges 3 zusammengespannt. Das Seil des Seilzuges 3 geht aus von einem Festpunkt 4 an einem Ende des Bandes 1 und ist über eine Umlenkeinrichtung 5 am anderen Ende des Bandes 1 zu einer Seilspanneinrichtung 6 am ersterwähnten Bandende zurückgeführt. Der Festpunkt 4 und die Seilspanneinrichtung 6 sind in den beiden Randbereichen desselben Bandendes angeordnet. Die Umlenkeinrichtung 5 ist als U-förmige Hülse aus Metall ausgebildet, die in das Ende des Bandes 1 eingelassen und gefettet ist.

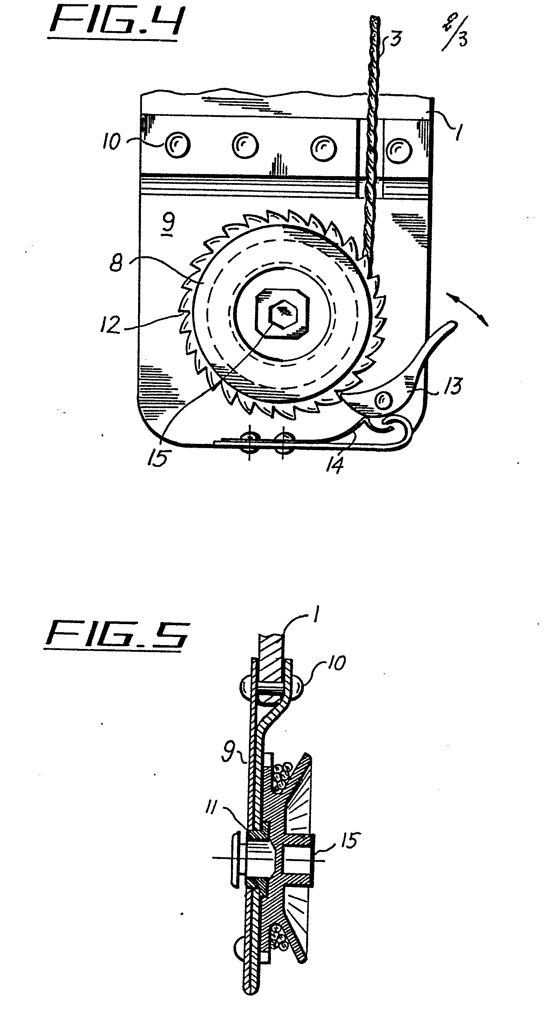

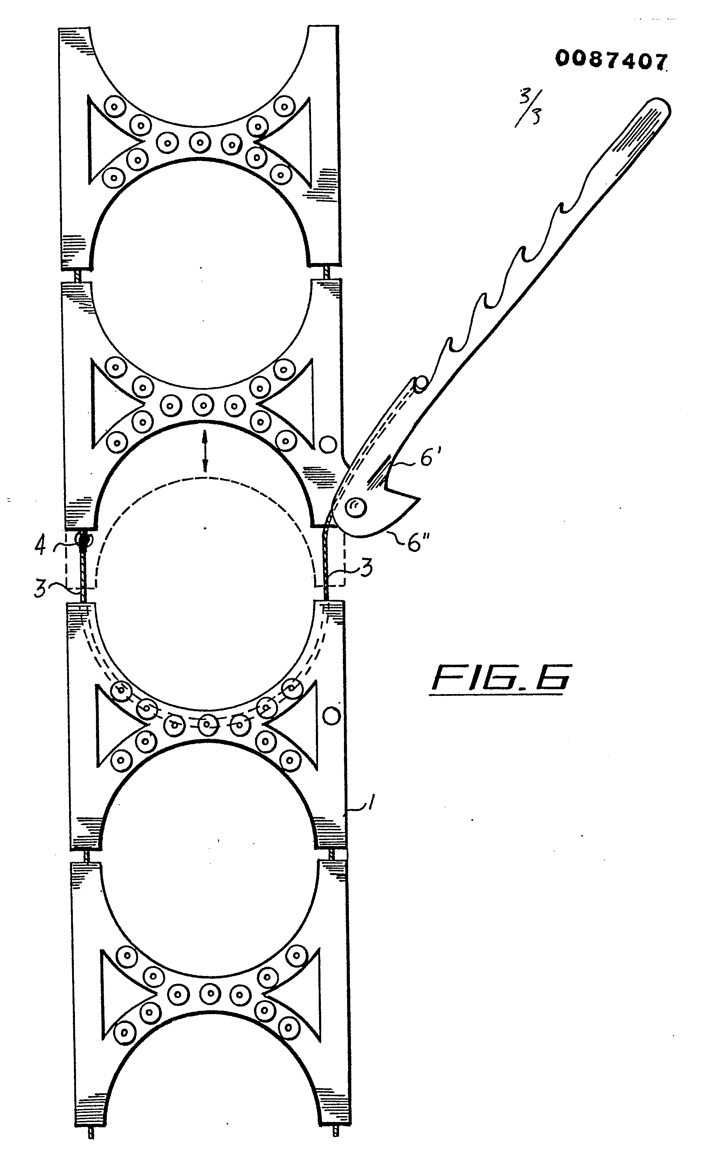

Wenn das Band 1 geöffnet ist, befindet sich das Seil des Seilzuges 3 in der Umlenkeinrichtung 5. Wenn das Band 1 um den Reifen 2 herum geschlossen werden soll, wird das Seil an seinem einen Ende, das mit einer Schlaufe oder einem Ring ausgeführt ist, in einen am Festpunkt 4 befindlichen Haken und mit seinem anderen Ende an der Seispanneinrichtung 6 eingehängt. Die Seilspanneinrichtung 6 ist (wie weiter unten anhand der Fig. 4 und 5 näher beschrieben ist) als Seilwinde mit einer in eine Verzahnung eingreifenden Klinkensperre ausgebildet. Das Seil des Seilzuges 3 kann mit seinem an der Seilspanneinrichtung 6 einzuhängenden Ende z.B. in eine Öffnung von deren Seilwindentrommel eingesteckt werden. Dann wird die Seilwindentrommel gedreht, wodurch das Band 1 sehr fest in Richtung der Pfeile P gespannt wird.

Bei der in Fig. 3 gezeigten Ausführungsform der Gleitschutzeinrichtung sind am linken Ende des Bandes 1' zwei jeweils im Randbereich befindliche Umlenkeinrichtungen 5' angeordnet. Die Umlenkeinrichtungen 5' sind als U-förmige Hülsen aus Metall ausgebildet. Am rechten Ende des Bandes 1' ist in der Mitte eine Umlenkeinrichtung 7 eingelassen, die als U-förmige Rinne ausgebildet ist. Wenn das Band 1' um den Luftreifen herum geschlossen werden soll, muß das Seil des Seilzuges 3' nicht nur mit seinen Enden bei 4' bzw. 6' am anderen Ende des Bandes 1' eingehängt werden, sondern es muß auch der mittlere Seilabschnitt in die dort befindliche Umlenkeinrichtung 7 eingelegt werden. Bei dieser Ausführung ist das Band 1' über seine Breite besonders gleichmäßig gespannt. Allfällige Spannungsunterschiede über die Länge des Seilzuges 3' gleichen sich bei der Fahrt sogleich aus.

In den Fig. 4 und 5 ist die Seilspanneinrichtung 6 in Form einer Seilwinde mit einer Seiltrommel 8 näher dargestellt. Die Seiltrommel 8 ist an einem in Richtung der Reifenachse radial abstehenden Lappen 9 am Ende des Bandes 1 gelagert, welcher als am Band 1 bei 10 befestigtes Blechteil ausgebildet ist. Eine Lagerbüchse 11 ist in eine entsprechende Öffnung des Blechteiles 9 eingepreßt. Die Seiltrommel 8 hat eine Außenverzahnung 12, in welche eine Klinkensperre bestehend aus einer Klinke 13 und einer Feder 14 eingreift. In eine axiale Öffnung 15 der Seiltrommel 8 mit einem Sechskantquerschnitt kann der mit passendem Querschnitt ausgeführte Schaft einer Kurbel (nicht dargestellt) in der Seilwinde eingesteckt werden. Das von der Seiltrommel 8 ausgehende Seil des Seilzuges 3 ist über eine in Fig. 2 bei 16 angedeutete Führungshülse in die Bandrichtung umgelenkt.

Bei der in Fig. 6 gezeigten Ausführung der Gleitschutzeinrichtung besteht die Seilspanneinrichtung 6' für den Seilzug 3 aus einem an dem einen Ende des Bandes 1 angelenkten Schwenkhebel 6'. Der Seilzug 3 läuft über eine Spannocke 6'' des Schwenkhebels 6', welcher als Führung für den Seilzug 3 eine Längsrille und eine Reihe von Haken als Einhängung für das in Fig. 6 rechts befindliche Ende des Seilzuges 3 aufweist.

0087407

- 6 -

<u>Patentansprüche</u>

1. Gleitschutzeinrichtung für Luftreifen, welche am Umfang des Reifens mittels eines Seilzuges festlegbar ist, der von einem Festpunkt an einem Ende ausgeht und über mindestens eine Umlenkeinrichtung am anderen Ende zum ersterwähnten Ende zurückgeführt ist, d a d u r c h gekennzeichnet, daß die Umlenkeinrichtung (5;5',7) bei der in an sich bekannter Weise als Band (1;1') mit einem Gleitschutzprofil ausgebildeten Gleitschutzeinrichtung quer innerhalb des Bandquerschnittes angeordnet und am ersterwähnten Ende eine Seilspanneinrichtung (6;6') befestigt ist.

2. Gleitschutzeinrichtung nach Anspruch 1, d a d u r c h gekennzeichnet, daß die Umlenkeinrichtung(en) (5;5') als U-förmige Hülse(n) ausgebildet ist (sind), die in das (die) Ende(n) des Bandes (1;1') eingelassen ist (sind)(Fig.1,3).

3. Gleitschutzeinrichtung nach Anspruch 1, d a d u r c h gekennzeichnet, daß die Umlenkeinrichtung(en) (7) als U-förmige Rinne(n) ausgebildet ist (sind), die in das (die) Enden des Bandes (1') eingelassen ist (sind) (Fig.3).

4. Gleitschutzeinrichtung nach den Ansprüchen 2 und 3, d a d u r c h gekennzeichnet, daß an einem Ende des Bandes (1') in den beiden Randbereichen je eine Hülse (5') und an dem anderen, den Festpunkt (4') und die Seilspanneinrichtung (6') aufweisenden Ende des Bandes (1') in der Mitte eine Rinne (7) angeordnet ist (Fig.3).

5. Gleitschutzeinrichtung nach einem der Ansprüche 1 bis 4, d a d u r c h gekennzeichnet, daß das in Umlenkeinrichtungen (5;5') geführte Seil des Seilzuges (3) mit einem Ende am Festpunkt (4;4') und mit seinem anderen Ende an der Seilspanneinrichtung (6;6'), z.B. mittels einer Schlaufen-Haken-Verbindung, einhängbar ist (Fig.1,3,6).

6. Gleitschutzeinrichtung nach einem der Ansprüche 1 bis 5, d a d u r c h gekennzeichnet, daß die Seilspanneinrichtung (6) als Seilwinde mit einer in eine Verzahnung (12) eingreifenden Klinkensperre (13,14) ausgebildet ist, (Fig.1-5), wobei die Seilwinde vorzugsweise eine axiale Öffnung (15) mit einem Mehrkantquerschnitt aufweist, in welche in an sich bekannter Weise ein kurbelschaft passenden Querschnittes einsteckbar ist.

7. Gleitschutzeinrichtung nach einem der Ansprüche 1 bis 5, d a d u r c h gekennzeichnet, daß die Seilspanneinrichtung (6') als am Bandende angelenkter Schwenkhebel mit einer Spannocke (6") sowie mit einer Führung und einer Einhängung für das eine Ende des Seilzuges (3) ausgebildet ist (Fig.6).

8. Gleitschutzeinrichtung nach einem der Ansprüche 1 und 5 bis 8, d a d u r c h gekennzeichnet, daß die Umlenkeinrichtung(en) in an sich bekannter Weise als am Bandende gelagerte Umlenkrolle(n) ausgebildet ist (sind).

FIG.1

FIG.2

FIG.3

# FIG.4

# FIG.5

FIG.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-3 487 869  (RAFFAELLI) <br> * Insgesamt; Figuren 2-4 * | 1 | B 60 C   27/10 |
| A | CH-A-  207 950  (SCHÄRER) <br> * Insgesamt; Figuren 2,4 * | 1 | |
| A | US-A-3 884 283  (ENGEL) <br> * Insgesamt; Figuren 1,2 * | 1 | |
| A | DE-A-2 122 009  (HÜTTNER) <br> * Seite  13, Zeilen 1-7; Figuren 3,8-10 * | 1 | |

| RECHERCHIERTE SACHGEBIETE (Int. Cl. ³) |
|---|
| B 60 C |

Der vorliegende Recherchenbericht wurde für alle Patentansprüche erstellt.

| Recherchenort <br> DEN HAAG | Abschlußdatum der Recherche <br> 02-06-1983 | Prüfer <br> AYITER I. |
|---|---|---|